# EUROPEAN PATENT SPECIFICATION

(11) **EP 3 147 809 B1**
(45) Date of publication and mention of the grant of the patent: **12.06.2019**
(21) Application number: 15186444.4
(22) Date of filing: 23.09.2015
(51) Int. Cl.: G06F 21/62, G06F 21/64

(54) **PROCESSING FILES TO BE STORED ON VIRTUAL DRIVE**
VERARBEITUNG VON AUF EINEM VIRTUELLEN LAUFWERK ZU SPEICHERNDEN DATEIEN
TRAITEMENT DE FICHIERS DEVANT ÊTRE STOCKÉS SUR UN PILOTE VIRTUEL

(43) Date of publication of application: 29.03.2017
(73) Proprietor: Avalosys Oy, 33200 Tampere (FI)
(72) Inventor: Pirhonen, Antti, 33200 Tampere (FI); Viitanen, Jari, 33200 Tampere (FI); Keskitalo, Ari, 33200 Tampere (FI); Kokkinen, Timo, 33200 Tampere (FI)
(74) Representative: Kantanen, Jukka

(56) References cited:
- EP-A2- 1 326 156
- WO-A1-2015/028438
- Unknown: "Virtual Hard Disks in Windows 7 and Windows Server 2008 R2", , 9 December 2008 (2008-12-09), XP055499216, Retrieved from the Internet: URL:https://docs.microsoft.com/en-us/previ ous-versions/windows/it-pro/windows-7/dd44 0865(v=ws.10) [retrieved on 2018-08-13]
- Unknown: "Virtual Hard Disk Image Format Specification, version 1.0", , 11 October 2006 (2006-10-11), XP055499220, Retrieved from the Internet: URL:http://www.google.com/url?sa=t&rct=j&q =&esrc=s&source=web&cd=3&ved=2ahUKEwil3tD4 2-ncAhWF66QKHXouAbEQFjACegQICRAC&url=http% 3A%2F%2Fdownload.microsoft.com%2Fdownload% 2Ff%2Ff%2Fe%2Fffef50a5-07dd-4cf8-aaa3-442c 0673a029%2FVirtual%2520Hard%2520Disk%2520F ormat%2520Spec_10_18_06.doc&usg=AOvVaw0KP8 UP-qa22aSY [retrieved on 2018-08-13]
- LOUIS A FOSTER ET AL: "Making files real with a virtual disk", SIGCSE BULLETIN, ACM, NEW YORK, NY, US, vol. 23, no. 1, 1 March 1991 (1991-03-01), pages 199-204, XP058311721, ISSN: 0097-8418, DOI: 10.1145/107005.107039
- LIANG J ET AL: "A virtual disk environment for providing file system recovery", COMPUTERS & SECURITY, ELSEVIER SCIENCE PUBLISHERS. AMSTERDAM, NL, vol. 25, no. 8, 1 November 2006 (2006-11-01), pages 589-599, XP027896400, ISSN: 0167-4048 [retrieved on 2006-11-01]

## Description

### FIELD OF THE INVENTION

The present invention relates to processing files to be stored on a virtual drive and particularly to processing files in a computer system.

### BACKGROUND OF THE INVENTION

In many computer systems files are stored without being protected against malicious actions by users or malware. In a security breach to the computer system, a malicious user has obtained access to the computer system and has access to the files stored to the computer system. After the access to the files has been obtained the malicious actions, e.g. amending the files, can be performed very quickly and relatively easily by the user or malware installed by the user to the computer system. The actions performed are not authorized by the owner of the files or the administrator of the computer system. Afterwards it is difficult to detect if a malicious action has been performed on the files stored in the computer system.

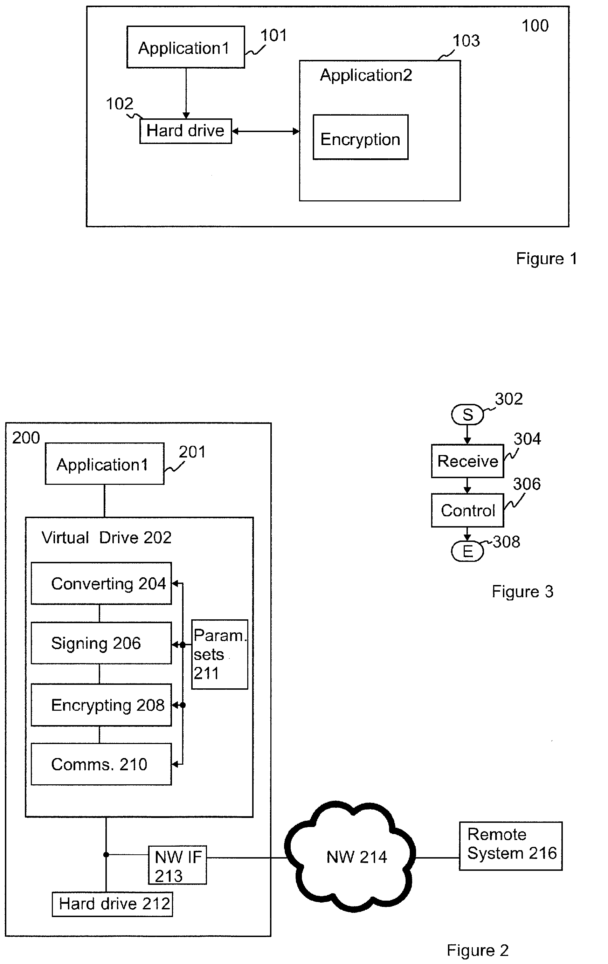

Figure 1 illustrates a conventional method of protecting files stored to a hard drive in a computer system 100. An application 101 being executed in the computer system writes a file to the hard drive 102. After the file is written to the hard drive and accessible to the operating system, another application 103 can read the file and protect the file by encrypting the file. A problem in this method is that the file is unprotected in the hard drive after the application 101 has written the file to the hard drive and before the file is encrypted by the other application 103. Even if the time between the writing the file and encrypting the file would be very small, there is a possibility that a malicious actions is performed on the file there between.

WO 2015/028438A1 discloses processing documents. A first component receives document data of at least one document, authenticates a user and stores the received document data of the at least one document in a database in the case that the authenticated user corresponds with a pre-specified or entitled user. A second component receives document data of at least one document , generates at least one document in a portable document format based on the received document data, authenticates a user, digitally signs and/or encrypting the at least one generated document in the portable document format and stores the at least one digitally signed and/or encrypted document in the portable document format in a database in the case that the au

thenticated user corresponds with a pre-specified or entitled user. A third component decides whether the at least one document shall be processed either in the first component or in the second component.

EP 1326156A2 discloses managing access to digital assets via a designated place or its sub-places. Files in a protected store are secured and can only be accessed by authorized users. An access control module can manage a plurality of stores, where each store uses different access policy for securing files. Each of the stores is associated with one of the security templates that contain essential security information and various parameters designated for a folder and may be in one or more files or in one or more system policies.

### BRIEF DESCRIPTION OF THE INVENTION

An object of the present invention is to provide a method and a system so as to alleviate the above disadvantages. The object of the invention is achieved by a method and a system which are characterized by what is stated in the independent claims. The preferred embodiments of the invention are disclosed in the dependent claims.

Some embodiments provide adaptive protection of files stored to a virtual drive.

### BRIEF DESCRIPTION OF THE DRAWINGS

In the following the invention will be described in greater detail by means of preferred embodiments with reference to the attached drawings, in which
Figure 1 illustrates a conventional method of protecting files stored to a hard drive in a computer system;
Figure 2 illustrates a system for processing files according to an embodiment; and
Figure 3 illustrates a method for processing files according to an embodiment.

### DETAILED DESCRIPTION OF THE INVENTION

Figure 2 illustrates a system 200 for processing files according to an embodiment. The system may comprise a memory 211 for storing a plurality of sets of parameters for processing files to be stored on a virtual drive and identifiers corresponding to the sets of parameters. The system may comprise an encryption module 208, a conversion module 204, a signature module 206 and an optional communications module 210 that may be caused to process files to be stored to the memory controlled by one of the sets of the parameters. Each set of the parameters may define module-specific parameters for at least two of the encryption module, conversion module and signature module. Since at least two modules may be controlled by the parameters, the files to be stored to the virtual drive may be protected adaptively. The system may have a local storage medium 212, for example a hard drive, for storing files and serving as the physical memory for the virtual drive.

The encryption module performs encryption of the files to be stored to the virtual drive. The signature module digitally signs the files to be stored to the virtual drive. The conversion module performs file conversions of the files to be stored to the virtual drive. The communications module may store the files to be stored to the virtual drive on available target storage media. The storing may be performed by delivering the files directly to the target storage medium, e.g. by executing a file operation. On the other hand the communications module may deliver the files to a computer system, e.g. a remote computer system, where the target storage medium is mounted accessible for file operations.

In an embodiment, a set of parameters defines one or more module-specific parameters for the communications module 210. The communications module may have a plurality of available target storage media 212, 216 and the communications module may store the file to one or more of the target storage media controlled by the parameters. The files may be stored by executing a file operation to the target storage media. In this way the files may be processed adaptively by the communications module such that the files may be stored to the target storage medium or media that provides a desired protection level for the files. The target storage media may comprise local and remote storage media such as memory devices. A local memory device may be a hard drive 212 that is a part of the system. The local memory device may be connected to the system by an internal bus or a peripheral bus. A remote memory device 216 may be a memory device located outside of the system and connected to the system over a network 214. In one example, the remote memory device may be located in a remote computer system. Examples of the remote computer systems comprise servers and Network attached storage (NAS) devices.

The desired protection level for the files may be used to determine one or more parameters for controlling the communications module such that the files may be stored to one or more of the available target storage media. In one example a set of parameters may cause that files may be stored to a local target storage medium or a remote storage medium or both the local and remote storage medium. Storing the file to the local storage medium may be desirable, when the network connection to the remote storage medium is not protected. Storing the file to the remote storage medium may be desirable, when the local storage medium is not encrypted. In an example, the system may be a computer system comprising an operating system and one or more applications 201, 202 executable in the operating system. The modules may be application modules or hardware modules. The application modules may be modules in one or more of the applications. The hardware modules may be circuits on a circuit board or bus cards connected to a computer bus in the computer system.

In an example, one 201 of the applications is capable of generating one or more files to be stored to the virtual drive. The virtual drive may be generated by a virtual drive application 202. Accordingly, the applications that generate the virtual drive and the files to be stored to the virtual drive may be separate applications. It should be appreciated that the operations of the separate applications can also be implemented in a single application. The virtual drive application may generate a logical representation of the physical memory of the computer system and/or a remote computer system 216. The logical representation may be referred to a virtual drive. The virtual drive may include a portion or portions of physical memory, e.g. hard drive and/or RAM, of the computer system and/or of the remote computer system. One or more other applications 201 may access the virtual drive for operating files on the virtual drive. Operating files on the virtual drive may comprise writing, storing and executing files, for example.

Accordingly, the virtual drive may be a storage drive in the computer system similar to physical drives of the computer system. A storage drive may refer to a memory or a portion of the memory of the computer system organized accessible to the operating system of the computer system for operating files. Accordingly, both the virtual drives and the physical drives may be storage drives in the computer system. However, as a difference to a physical drive, the virtual drive utilizes physical resources of one or more physical devices that are accessible storage drives in the same or different operating system.

Examples of representing storage drives in the operating system comprise letter notations, e.g. "C:" and "D:", etc., known from the Microsoft Windows operating systems. It should be appreciated that different operating systems may use other notations to represent storage drives.

In an embodiment, the system may comprise a network interface 213 for establishing a connection to a remote computer system 216 via a communications network 214. The network interface provides files stored to the virtual drive may be sent to the remote computer system controlled by the set of parameters.

The network interface may be provided by a network interface card. The network interface may be capable of wired or wireless communications in the communications network. The communications may be implemented by Internet Protocol connection over an Ethernet connection, a Wi-Fi connection or data connection in a mobile communications network. An example of the connection provided by the network interface card is an Internet connection.

In an embodiment, the files to be stored may comprise financial payment data. The financial payment data comprises information that defines one or more payments from a payer to a payee. The financial payment data is conventionally generated in a source system, where the financial payment data may be delivered to a remote computer system, e.g. a bank, over an Internet connection for executing the payment(s) defined by the financial payment data. The source system may be an Enterprise Resource Planning (ERP) application 201 for collection and management of data related to business activities.

The financial payment data may include at least the following information:
name of the payee,
name of payer,
bank account of the payer,
bank account number of the payee, and
amount payable to the payee's bank account from the payer's bank account.

The financial payment data may also include additional information for example a reference number of the payment, a message, and a date for executing the payment.

Conventional operation of the source system comprises the source system generating a text file that includes the financial payment data in a standard format accepted by the remote computer system, e.g. a bank. In accordance with an embodiment, the format of the financial payment data may detected on the basis of the format of the file. Examples of the formats comprise LM02 and ISO 20022 message formats. Examples of the ISO 20222 message formats comprise message formats used in a specific business area. The financial payment data may be according to a message format defined for Payments & Cash Management business area. Examples of the message formats defined for Payments & Cash Management business area comprise "pain" and "camt" described in ISO 20022 (https://www.iso20022.org/payments_messages.page). Specific "camt" and "pain" messages are identified by identifiers, Msg IDs, e.g. pain.001.001.003 and camt.032.001.03. The format of the financial payment data may be detected from the Msg ID in the file.

ISO 20022 (https://www.iso20022.org) defines message formats for various areas of business. One of the business areas is Payments & Cash Management.

**Table 1 Messages in Payments & Cash Management business area in ISO 20022**

| **PAYMENTS & CASH MANAGEMENT** | | |
|---|---|---|
| **Category** | Business area code | description |
| Payments Initiation | pain | Messages that support the initiation of a payment from the ordering customer to a financial institution that services a cash account and reporting its status. |
| Payments Clearing and Settlement | pacs | Messages that support the clearing and settlement processes for payment transactions between financial institutions. |
| Cash Management | camt | Messages that support the reporting and advising of the cash side of any financial transactions, including cash movements, transactions and balances, plus any exceptions and investigations related to cash transactions. |
| Payments Remittance Advice | remt | Messages that support communication between creditors and debtors regarding remittance details associated with payments. |

In Table 1, the four character business area code is used in the Message Identifier of related ISO 20022 Message Definitions (https://www.iso20022.org/payments_messages.page). For example, messages related to Cash Management may be identified from the business area code "camt" and messages related to the Payments Initiation may be identified from the business area code "pain". Formats of the data concerning the business areas may be detected from the identifiers, MSG IDs, that identify specific messages in each business area. The MSG IDs may include the business area code similar to described in the "camt" and "pain" messages above.

Financial payment data in the message format according to ISO 20022 may be provided in an Extensible Markup Language (XML) file comprising a <Document> element that has a parameter that identifies the specific message format according to ISO 20022, and the message content that may include the information explained above regarding information that is at least included in the financial payment data. Financial payment data in the LM02 format includes an identifier LM02 in each row of the file.

In accordance with an embodiment, once the message format of the file, e.g. "pain" format pain.001.001.003, is detected, it may be determined whether the file needs to be converted to another format. If format of the financial payment data matches to the file format supported by the remote computer system, the file does not need to be converted. If the format of the financial payment data does not match to the file format supported by the remote computer system, the file may be converted to the format supported by the remote computer system.

Accordingly, the financial payment data is in a format that may be viewed and understood by a person using a text editor. Accordingly the financial payment information may be for example in an ASCII format in the text file. Since the financial payment information is in a human-readable format the text-file may be easily edited by a text editor or shell scripts, once the file including the financial payment data is accessible by file operations in an operating system.

However, the financial payment data may be particularly sensitive to malicious actions if the financial payment data is not protected before the financial payment data is accessible to file operations. If the financial payment data is maliciously amended when the file is stored on the storage drive but before the payment(s) are executed, the payment(s) may be made to wrong payees, with wrong amounts and/or to wrong bank accounts. Detection and correction of the amendments to the payment data may be difficult or even impossible. Therefore, it may be preferred to protect the financial payment data before the file including the financial payment data is made available for accessing on a storage drive. On the other hand there may be a need to amend the financial payment data after the financial payment data, e.g. the file including the financial payment data, is generated since the bank may require the data in a specific format and the file received form the source system is in a different format.

Modules, applications, memory and/or interfaces described above may be operatively connected to cause one more functionalities according to an embodiment. Applications and modules may be connected software interfaces that enable exchange of information between the applications and modules. The modules may be entities of the virtual drive application 202 or the modules may be separate applications interoperating with the virtual drive application executed in the system. Physical connections between the described entities may be implemented by an internal computer bus or a peripheral bus. The memory devices may comprise a hard drive and/or a Random Access Memory (RAM), for example. The hard drive may serve as a permanent storage of files, whereas the RAM may serve as run-time memory for applications and modules.

Figure 3 illustrates a method for processing files according to an embodiment. The method facilitates protecting files before the files are stored accessible for file operations. The method may be performed by the system 200 of Figure 2, for example. The method will now be explained with reference to the modules in Figure 2 and the items in Figure 3. The method may start 302, when the encryption module 208, conversion module 204 and signature module 206 are operational in the system. The virtual drive application may be executed in the system such that file operations may be performed to files stored on the virtual drive generated by the virtual drive application.

A file to be stored on the virtual drive may be received 304 from an application 201, for example an ERP application, executed in the system. The file may be received by one of the modules for processing the file comprising the signature module 206, conversion module 204 and encryption module 208. In one example, the file may be received first by the signature module. After the module that received the file has processed the file and outputs a processed file, the file may be processed by the other modules one by one.

The received file may have a filename that may include the name of the file and also a directory path of the file. Accordingly a complete filename may identify the name of the file to be stored to the virtual drive and also the directory path that defines a target location of the file on the virtual drive. In this way the filename may uniquely identify the file in the whole virtual drive since files having the same name, e.g. example.docx, can be differentiated on the basis of the directory path of the files. The complete filename enables file operations on the file even if the virtual drive would have files with similar names in other directories.

At least two modules may be controlled 306 by one of the sets of parameters. Accordingly, at least any two of the encryption module, signature module and conversion module may be controlled by the set. It is also possible to control all three modules by the set. The set of parameters for controlling the modules may be the set that has an identifier that indicates the filename of the received file. In one example, the identifier of the set may correspond or be the same as the filename or a portion of the filename of the file to be stored to the virtual drive.

The modules process the files controlled by the set of parameters. Preferably the file is processed at least by the signature module and the encryption module to protect the file against malicious actions before the file is stored to the virtual drive. Preferably the file is processed by the conversion module before the other modules. However, it should be appreciated that processing by the conversion module may not be necessary if the received file is in the correct format. Preferably the file is first processed by the signature module before the file is processed by the encryption module. After the file is processed by the modules the file may be stored to the virtual drive, where the file may be accessible for file operations. Accordingly, before the received file is processed by the modules, the contents of the received file are not accessible on the virtual drive, whereby file operations cannot be performed. In some implementations, the received file may be indicated by name on the virtual drive without the content of the file. In such a case the size of the received file may be indicated as 0kB on the virtual drive. The file operation may be for example a command to store the file identified on the basis of the filename. An example of the command is read.file("Z:\{path}\{name}"), where the filename is Z:\{path}\{name}, where Z: is an identifier of the virtual drive in the operating system, {path} is a directory path for the file on the virtual drive and {name} identifies the name of the file to be stored in the directory defined by the directory path.

In an embodiment, one or more of the modules of the virtual drive application may monitor file operations on the virtual drive for receiving 304 the file to be stored on the virtual drive. Accordingly, if a file operation to store a file to the virtual drive is detected, the file operation may be suspended and the file may be received to be processed by the modules controlled 306 by the set of parameters. The file operation may be detected on the basis of the command to perform file operation and suspend the file operation until the file is processed by at least two of the modules controlled by the set of parameters. An example of the command to perform a file operation is the command to store the file described above.

In an embodiment, a set of parameters for controlling the modules may be determined by comparing the filename of the received 304 file with the identifiers of the sets of the parameters. The identifiers of the sets of parameters may be stored and correspondence between the filename and the identifiers may indicate the set of parameters for controlling the modules. The correspondence may be determined on the basis of a correlation value calculated over an identifier and the filename, for example. The correspondence may be determined also by matching an identifier and the filename.

In an embodiment file type definitions may be used for defining the sets of parameters. A file type definition may comprise a reference filename that may serve as an identifier of the set of parameters. The filename of the received file may be compared with the reference filename for determining a type of the received file to correspond with the file type definition and for processing the received file according to the set of parameters defined by the file type definition. The reference filename may serve as an identifier that indicates one or more filenames that may be stored on the virtual drive. The reference filename may comprise a directory path on the virtual drive and/or a name of the file.

In an example, the reference filename may be defined by a character string. The character string may comprise one or more wildcard characters. A wildcard character is a special character that represents one or more other characters. Examples of the wildcard characters comprise an asterisk (*), which may represent zero or more characters in the character string, and a question mark (?), which may represent any one character in the character string.

In an embodiment, the set of parameters for controlling the modules may define an encryption method to be applied to the received file. The encryption method may be one of a plurality of encryption methods used by the encryption module. In this way the parameters may be used to control the encryption module to encrypt the received file. Examples of the encryption methods comprise Data encryption Standard (DES), 3DES and AES. DES is a symmetric-key algorithm for encryption of electronic data. 3DES refers to Triple Data Encryption Algorithm (TDEA or Triple DEA) symmetric-key block cipher, which applies the Data Encryption Standard (DES) cipher algorithm three times to each data block. AES refers to Advanced Encryption Standard established by the U.S. National Institute of Standards and Technology (NIST) in 2001. Files in XML format may be encrypted according to XML Encryption standard (W3C XML Encryption Syntax and Processing) that may utilize DES, 3DES or AES.

There may be a plurality of remote computer systems, where the received file may be delivered and the encryption methods to be applied to each target remote computer system may be different. Accordingly, different encryption methods may be used for protecting files delivered to different remote computer systems. Preferably the encryption method applied to the received file may be defined on the basis of the remote computer system. Accordingly, the encryption method applied to the received file should be compatible with the encryption method used by the remote computer system such the remote computer system may decode the encrypted file. There may be a plurality of remote computer systems, where the received file may be delivered and the encryption methods to be applied to each remote computer system may be different. Accordingly, different encryption methods may be used for protecting files delivered to different remote computer systems.

In an embodiment, the set of parameters for controlling the modules may define at least one digital signature to be applied to the received file. The digital signature may be at least one of a plurality of digital signatures available in the signature module. In this way the parameters may be used to control the signature module to sign the received file. The digital signatures may be based on a key pair comprising a public key and private key. The received file may be protected by the key pair such that the signature module may sign the received file using the private key. The public key may be delivered to a remote computer system or the public key may be available to the remote computer system such that the remote computer system may verify the signature of the received file delivered to the target system against the public key.

It should be appreciated that there may be a plurality of remote computer systems, where the received file may be delivered. The digital signatures to be applied to each target system may be different. Accordingly, different pairs of private and public keys may be used for protecting files delivered to different remote computer systems.

In an embodiment, the set of parameters for controlling the modules may define a target file format for the received file. The target file format one of a plurality of target file formats available in the conversion module. In this way the parameters may be used to control the conversion module to convert the received file to the target file format. Examples of the target file formats comprise an XML (extensible Markup Language) file according to the ISO 20022 standard and non-XML file format such as LM02 format.

In an embodiment, the received 304 file may be processed by a communications module. The communications module may process the file after the other modules, e.g. the conversion module, signature module and encryption module have processed the file to be stored to the virtual drive. The communications module may have a plurality of available target storage media and the communications module may store the file to one or more of the target storage media. The storing may be performed by delivering the files to the target storage medium e.g. using a file operation. Examples of the target storage media comprise a local memory device and a remote memory device. The target storage media of the communications module may be linked to the virtual drive, whereby files may be delivered to the target storage using file operations. Availability of the storage media may be subject to various conditions, for example correct operation of the connections to the storage media. The storage media may be located on a remote computer system or a local computer system. Preferably, after the received file processed by the communications module, the file is removed from the virtual drive. In this way no copies of the file are maintained on the virtual drive.

The method ends 308 after the modules have been controlled by the parameters and the received file has been processed by the modules controlled by a set of parameters. The processed file may be stored to the virtual drive to be accessible for file operations. Since the file is processed as controlled by the parameters before the file is stored to the virtual drive, malicious actions on the file may be prevented and detection of the malicious actions performed on the file may be facilitated.

In an embodiment, the method may end 308 after the file has been processed by the communications module. In this way the file may be stored to the storage media available to the communications module. Prior to processing by the communications module the file may have been processed by at least the encryption and signature modules and optionally the conversion module.

In an embodiment processing of the file by the modules may have one or more default parameters that cause controlling the modules on the basis of one or more system-level criteria. The default parameters may be defined for all files to be stored to the virtual drive. The system-level criteria depend on properties of the system. Examples of the system-level criteria may comprise correct operation of connection to a target storage medium. When the connection to a remote target storage media, e.g. remote system 216, is operational, i.e. the connection is up, the default parameters may control a communications module to store the processed file to the remote target storage media device 216. However, when the connection to the remote target storage media is not operational, i.e. the connection is down, the default parameters may control a communications module to store the processed file to a local target storage media 212. It should be appreciated that it may be a default parameter to store the processed file to the local target storage media irrespective of the correct operation of the connection to the remote target storage media.

Computer systems according to an embodiment and corresponding arrangements and systems may comprise one or more processors and memory that comprise executable code, e.g. computer program code, that when executed cause performing a method according to an embodiment.

An embodiment comprises a computer program product comprising executable code, e.g. computer program code, that when executed, cause execution of method according to an embodiment. The executable code may implement one or more of the modules and applications of the system 200.

An embodiment provides a computer program embodied on a distribution medium, for example a non-transitory computer readable storage medium, comprising program instructions which, when loaded into an electronic apparatus, cause the electronic apparatus to perform a method according to an embodiment. The electronic apparatus may comprise a processor and memory. Examples of the electronic apparatus comprise a computer.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or processor or it may be distributed amongst a number of computers or processors.

The techniques described herein may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

It should be appreciated that various examples and embodiments described herein may be used in various fields of technology that have systems capable of generating data, such as financial payment data, that needs conversion, protection and/or encryption. Examples of the systems comprise health care systems, critical data systems for national security and systems for processing highly confidential data of governments or companies.

It will be obvious to a person skilled in the art that, as the technology advances, the inventive concept can be implemented in various ways. The invention is defined by the scope of the claims.

## Claims

1. A method for processing files to be stored on a virtual drive, wherein the method comprises:
storing a plurality of sets of parameters for processing files to be stored on the virtual drive and identifiers corresponding to the sets of parameters, wherein the files are processed by an encryption module, a conversion module and a signature module; whereby each set of parameters defines module-specific parameters for controlling at least two of the modules;
monitoring file operations on the virtual drive;
if a file operation to store a file to the virtual drive is detected, the file operation is suspended for processing the file by the modules controlled by the parameters ; the processing comprising:
receiving (202) the file to be stored on the virtual drive;
controlling (204) at least two of the modules by the set of parameters that has an identifier that indicates the filename of the received file, wherein the received file is signed by the signature module and encrypted by the encryption module before the file is stored to the virtual drive .

2. A method according to claim 1, wherein the filename of the received file is compared with the identifiers of the sets of the parameters.

3. A method according to any one of the preceding claims, wherein a set of parameters defines an encryption method to be applied to the received file from a plurality of encryption methods used by the encryption module.

4. A method according to any one of the preceding claims, wherein a set of parameters defines a digital signature to be applied to the received file from a plurality of digital signatures available in the signature module.

5. A method according to any one of the preceding claims, wherein a set of parameters defines one or more module-specific parameters for a communications module for defining a target storage medium from a plurality of target storage media available to the communications module.

6. A method according to any one of the preceding claims, wherein a set of parameters defines a target file format from a plurality of target file formats available in the conversion module.

7. A method according to any one of the preceding claims, wherein the set of parameters comprise default parameters that cause controlling the modules on the basis of one or more system-level criteria.

8. A method according to any one of the preceding claims, wherein the files comprise financial payment data.

9. A system comprising a memory for storing a plurality of sets of parameters for processing files to be stored on a virtual drive and identifiers corresponding to the sets of parameters, an encryption module, a conversion module and a signature module, said modules being capable of processing files to be stored to the virtual drive, wherein each set of parameters defines module-specific parameters for controlling at least two of the modules, and the memory, the encryption module, a conversion module and the signature module are operatively connected, and the system is adapted to:
monitoring file operations on the virtual drive;
if a file operation to store a file to the virtual drive is detected, the file operation is suspended for processing the file by the modules controlled by the parameters; the processing comprising:
receiving (202) the file to be stored on the virtual drive;
controlling (204) at least two of the modules by the set of parameters that has an identifier that indicates the filename of the received file, wherein the received file is signed by the signature module and encrypted by the encryption module before the file is stored to the virtual drive.

10. A system according to claim 9, wherein the system is adapted to perform a method according to any one of claims 1 to 8.

11. A computer program product comprising executable code that when executed, is adapted to execute functions of a method according to any one of claims 1 to 8.

## Patentansprüche

1. Ein Verfahren für die Verarbeitung von Dateien zum Speichern auf einem virtuellen Laufwerk, wobei das Verfahren umfasst:
Speichern einer Vielzahl von Sätzen von Parametern zur Verarbeitung von Dateien zum Speichern auf einem virtuellen Laufwerk und den Parametersätzen entsprechenden Kennzeichen, wobei die Dateien mit einem Verschlüsselungsmodul, einem Konvertierungsmodul und einem Signaturmodul verarbeitet werden; wobei jeder Satz von Parametern modul-spezifische Parameter zum Steuern von wenigstens zwei der Module definiert;
Überwachen von Dateioperationen auf dem virtuellen Laufwerk;
wenn eine Dateioperation zum Speichern einer Datei auf dem virtuellen Laufwerk erkannt wird, wird die Dateioperation zum Verarbeiten der Datei mit den von den Parametern gesteuerten Modulen angehalten; das Verarbeiten umfassend:
Annehmen (202) der Datei zum Speichern auf dem virtuellen Laufwerk;
Steuern (204) von wenigstens zwei der Module mit dem Satz von Parametern, der ein Kennzeichen hat, das den Dateinamen der angenommenen Datei anzeigt, wobei die angenommene Datei von dem Signaturmodul signiert und von dem Verschlüsselungsmodul verschlüsselt wird, bevor die Datei auf dem virtuellen Laufwerk gespeichert wird.

2. Ein Verfahren nach Anspruch 1, wobei der Dateiname der angenommenen Datei mit den Kennzeichen der Sätze der Parameter verglichen wird.

3. Ein Verfahren nach einem der voranstehenden Ansprüche, wobei ein Satz der Parameter von der Vielzahl der vom Verschlüsselungsmodul verwendeten Verschlüsselungsverfahren ein Verschlüsselungsverfahren definiert, das auf die angenommene Datei angewendet wird.

4. Ein Verfahren nach einem der voranstehenden Ansprüche, wobei ein Satz der Parameter aus einer Vielzahl von digitalen Signaturen von einer Vielzahl der im Signaturmodul verfügbaren digitalen Signaturen eine digitale Signatur definiert, die auf die angenommene Datei angewendet wird.

5. Ein Verfahren nach einem der voranstehenden Ansprüche, wobei ein Satz der Parameter ein oder mehrere modul-spezifische Parameter für ein Kommunikationsmodul definiert zur Definition eines Zielspeichermediums aus einer Vielzahl der dem Kommunikationsmodul verfügbaren Speichermedien.

6. Ein Verfahren nach einem der voranstehenden Ansprüche, wobei ein Satz der Parameter ein Zieldateiformat aus einer Vielzahl von in dem Konvertierungsmodul verfügbaren Zieldateiformaten definiert.

7. Ein Verfahren nach einem der voranstehenden Ansprüche, wobei der Satz der Parameter vorgegebene Parameter umfasst, die die Steuerung der Module auf der Grundlage von einem oder mehr system-level Kriterien bewirkt.

8. Ein Verfahren nach einem der voranstehenden Ansprüche, wobei die Dateien finanzielle Zahlungsdaten umfassen.

9. Ein System bestehend aus einem Arbeitsspeicher zur Speicherung einer Vielzahl von Sätzen von Parametern zur Verarbeitung von Dateien zum Speichern auf einem virtuellen Laufwerk und den Parametern entsprechenden Kennzeichen, einem Verschlüsselungsmodul, einem Konvertierungsmodul und einem Signaturmodul, besagte Module fähig, Dateien zur Speicherung auf einem virtuellen Laufwerk zu verarbeiten, wobei jeder Satz von Parametern modul-spezifische Parameter zur Steuerung von wenigsten zwei der Module definiert, und der Arbeitsspeicher, das Verschlüsselungsmodul, das Konvertierungsmodul und das Signaturmodul operativ verbunden sind, und das System angepasst ist zum:
Überwachen von Dateioperationen auf dem virtuellen Laufwerk;
wenn eine Dateioperation zum Speichern einer Datei auf dem virtuellen Laufwerk erkannt wird, wird die Dateioperation zum Verarbeiten der Datei mit den von den Parametern gesteuerten Modulen angehalten; das Verarbeiten umfassend:
Annehmen (202) der Datei zum Speichern auf dem virtuellen Laufwerk;
Steuern (204) von wenigstens zwei der Module mit dem Satz von Parametern, der ein Kennzeichen hat, das den Dateinamen der angenommenen Datei anzeigt, wobei die angenommene Datei von dem Signaturmodul signiert und von dem Verschlüsselungsmodul verschlüsselt wird, bevor die Datei auf dem virtuellen Laufwerk gespeichert wird.

10. Ein System nach Anspruch 9, wobei das System angepasst ist, ein Verfahren nach einem der Ansprüche 1 bis 8 auszuführen.

11. Ein Rechnerprogramm bestehend aus ablauffähigem Code, der im Ablauf zur Ausführung von Funktionen eines Verfahrens nach einem der Ansprüche 1 bis 8 angepasst ist.

## Revendications

1. Procédé de traitement des fichiers à mémoriser sur un disque virtuel, ledit procédé comprenant :
la mémorisation d'une pluralité d'ensembles de paramètres destiné au traitement des fichiers à mémoriser sur le disque virtuel et d'identifiants correspondant auxdits ensembles de paramètres, les fichiers étant traités par un module de cryptage, un module de conversion et un module de signature ; l'ensemble de paramètres respectif définissant des paramètres spécifiques au module pour commander au moins deux des modules ;
la surveillance des opérations de fichier sur le disque virtuel ;
lorsqu'une opération de fichier destinée à mémoriser un fichier sur le disque virtuel est détectée, l'opération de fichier est suspendue pour le traitement du fichier par les modules commandés par les paramètres ; le traitement comprenant :
la réception (202) du fichier à mémoriser sur le disque virtuel ;
la commande (204) d'au moins deux des modules par l'ensemble de paramètres, lequel comporte un identifiant, lequel indique le nom du fichier du fichier reçu, le fichier reçu étant signé par le module de signature et crypté par le module de cryptage avant que le fichier ne soit mémorisé sur le disque virtuel.

2. Procédé selon la revendication 1, le nom de fichier du fichier reçu étant comparé aux identifiants des ensembles de paramètres.

3. Procédé selon l'une quelconque des revendications précédentes, un ensemble de paramètres définissant un procédé de cryptage à appliquer au fichier reçu à partir d'une pluralité de procédés de cryptage utilisés par le module de cryptage.

4. Procédé selon l'une quelconque des revendications précédentes, un ensemble de paramètres définissant une signature numérique à appliquer au fichier reçu à partir d'une pluralité de signatures numériques disponibles dans le module de signature.

5. Procédé selon l'une quelconque des revendications précédentes, un ensemble de paramètres définissant un ou une pluralité de paramètres spécifiques au module pour un module de communication pour définir un support d'enregistrement cible à partir d'une pluralité de supports d'enregistrement cibles disponibles dans le module de communication.

6. Procédé selon l'une quelconque des revendications précédentes, un ensemble de paramètres définissant un format de fichier cible à partir d'une pluralité de formats de fichier cibles disponibles dans le module de conversion.

7. Procédé selon l'une quelconque des revendications précédentes, l'ensemble de paramètres comprenant des paramètres par défaut, lesquels permettent de commander les modules en fonction d'un ou d'une pluralité de critères au niveau du système.

8. Procédé selon l'une quelconque des revendications précédentes, les fichiers comprenant des données de paiement.

9. Système comprenant une mémoire permettant de mémoriser une pluralité d'ensembles de paramètres destinés au traitement des fichiers à mémoriser sur un disque virtuel et d'identifiants correspondant auxdits ensembles de paramètres, un module de cryptage, un module de conversion et un module de signature, lesdits modules étant aptes à traiter les fichiers à mémoriser sur le disque virtuel, l'ensemble de paramètres respectif définissant des paramètres spécifiques au module pour commander au moins deux des modules, et la mémoire, le module de cryptage, un module de conversion et le module de signature étant connectés de manière opérationnelle, et le système étant conçu :
pour surveiller les opérations de fichier sur le disque virtuel ;
lorsqu'une opération de fichier destinée à mémoriser un fichier sur le disque virtuel est détectée, l'opération de fichier est suspendue pour le traitement du fichier par les modules commandés par les paramètres ; le traitement comprenant :
la réception (202) du fichier à mémoriser sur le disque virtuel ;
la commande (204) d'au moins deux des modules par l'ensemble de paramètres, lequel comporte un identifiant, lequel indique le nom de fichier du fichier reçu, le fichier reçu étant signé par le module de signature et crypté par le module de cryptage avant que le fichier ne soit mémorisé sur le disque virtuel.

10. Système selon la revendication 9, le système étant conçu pour mettre en oeuvre un procédé selon l'une quelconque des revendications 1 à 8.

11. Produit de programme informatique comprenant un code exécutable, lequel, lorsqu'il est exécuté, est conçu pour exécuter les fonctions d'un procédé selon l'une quelconque des revendications 1 à 8.
